# EUROPEAN PATENT APPLICATION

(11) **EP 4 589 139 A1**
(43) Date of publication of application: **23.07.2025**
(21) Application number: 24382049.5
(22) Date of filing: 19.01.2024
(51) Int. Cl.: F03D 7/04, F03D 9/25, F03D 17/00

(54) **MONITORING POWER LOSS OF A WIND PARK**

(71) Applicant: Siemens Gamesa Renewable Energy Innovation & Technology S.L., 48170 Zamudio, Vizcaya (ES)
(72) Inventor: The designation of the inventor has not yet been filed
(74) Representative: SGRE-Association

(57) **Abstract**

A method of monitoring the operation of a wind park (100) comprising plural wind turbines (110) is provided. The wind turbines (110) generate electrical power, and the wind park (100) is configured to collect the generated electrical power and to feed the collected electrical power to a power grid (200). The monitoring method comprises monitoring an individual electrical power output of plural individual wind turbines (110) of the wind park (100) and determining a summed individual power output by summing the monitored individual electrical power output of the wind turbines (110). It further comprises monitoring a wind park (100) electrical power output fed by the wind park (100) to the power grid (200) and estimating a power loss of the wind park (100) based on a difference between the wind park (100) electrical power output fed by the wind park (100) to the power grid (200) and the summed individual power output.

## Description

### FIELD OF THE INVENTION

The present invention relates to a method of monitoring the operation of a wind park by monitoring the produced power from individual turbines and the wind park itself and estimating a power loss of the wind park.

### BACKGROUND

Conventionally, wind parks are built in different environments. They accordingly have a different layout, such as different configurations of their collector grid. This results in different configurations and different power loss for transporting the generated electrical power to the power grid. Also, local changes, such as the construction of new wind turbines in the wind parks or changes to the power flow topology can change the operating conditions of the park. In turn, these changes of the operating conditions can affect the power flow and power losses of the whole wind park. During normal operation of a wind park, electrical power losses are present in the collector grid. However, these electrical power losses can be increased due to misconfigurations of the site configuration, the wind park power flow topology and the like.

A misconfiguration of the site configuration can therefore result in increased power loss of the wind farm and therefore power production is not guaranteed as in normal operation. It is desirable to avoid these negative effects.

### SUMMARY

Accordingly, there is a need to mitigate at least some of the drawbacks mentioned above, in particular to notice when a site is misconfigured and as a result is not producing as much power as in normal operation conditions.

This need is met by the features of the independent claims. The dependent claims describe embodiments of the invention.

According to an embodiment of the invention, a method of monitoring the operation of a wind park comprising plural wind turbines is provided. The wind turbines are configured to generate electrical power and the wind park is configured to collect the generated electrical power and to feed the collected electrical power to a power grid. The method comprises the monitoring of an individual electrical power output of plural individual wind turbines of the wind park and determining a summed individual power output by summing the monitored individual electrical power output of the wind turbines. It further comprises the monitoring of a wind park electrical power output fed by the wind park to the power grid and estimating a power loss of the wind park based on a difference between the wind park electrical power output fed by the wind park to the power grid and the summed individual power output.

By estimating the power loss of the wind park by using the electrical power output of individual turbines and the whole park, it can be determined how much power the wind park is losing for various operating conditions present at different times of operation. Additionally, monitoring the power loss in such way may enable the operator to identify site misconfigurations, incorrect location of the power measurement meters,
incorrect location and/or measurements from the measurement meters, incorrect configuration changes to power flow topology, and the like. The power loss monitored in such way may reliably indicate any respective problem in the wind park, and thus allows the operator to identify and remove such problem. It may be further possible to store the data obtained in a database to allow long-term analysis. This may be used to derive trends in power loss. Subsequently, the optimal configuration of the wind park may be determined.

According to an embodiment, the monitoring of the electrical output of the wind park may be performed at a grid coupling point, for example at a point of common coupling (PCC), of the plural wind turbines of the wind park to the power grid. This allows practical implementation to the already existing hardware of the wind park operation system.

Furthermore, the summed individual power output may for example include the power output of all wind turbines of the wind park that feed electrical power to the power grid.

As an example, the summed individual power output may also include the individual power output of each of the plural wind turbines of the wind park, such that the individual electrical power output provided by each wind turbine may be monitored individually.

The summed individual power output may then for example be monitored at the power output of the wind turbine, e.g., using a respective power meter, or it may be monitored internally, e.g., by using a wind turbine controller. The individual measurement of the power output of the wind turbines provides an opportunity to analyze the power loss depending on every component of the wind park. This may open up the possibility to detect localized problems and to correct them in a further step.

The power output of several individual wind turbines of the plural wind turbines may in some embodiments also be monitored collectively for one or more subgroups of wind turbines of the wind park. A subgroup may comprise less than 10, 5, 4, or 3 wind turbines. The summed individual power output may then include the power output monitored collectively from such subgroup. This type of monitoring may still allow estimation of the power loss of individual components of the wind farm, with a reduction of measurement effort. This may be implemented in regions of the wind park, which are not prone to drastic changes in the configuration and thus no large differences in the power loss are expected under normal operation. Next to providing such collective monitoring of a subgroup, the individual electrical power output of at least 1, 2, 3, 4, or more individual wind turbines of the wind park may be monitored individually.

As an example, it may be possible to equip every wind turbine of the wind park that is located at areas where topology changes are expected with a monitoring system, whereas wind turbines located in areas where no changes are anticipated may be grouped into a subgroup measurement. Thereby, the power loss monitoring may be configured to group the individual wind turbines into spatial regions of interest, which may potentially further reduce the measurement effort.

In an embodiment, the summed individual power output provided by the wind turbines and the wind park electrical power output fed by the wind park to the power grid may be monitored repeatedly at predetermined time intervals or may be monitored in real time. For example, the wind park power loss may be observed in real time operation, providing the opportunity to quickly resolve problems, which are occurring during operation of the wind park. In addition, it may offer the possibility of setting time intervals according to individual time resolution requirements. As a result, events that occur at known operating times may be monitored at a higher resolution, while the resolution may be set to sufficiently low values for anticipated normal operating conditions. For example, such time interval may be between 50 ms and 10 s, providing essentially real time monitoring, or may be set longer, e.g. between 10 s and 2 h, or between 2 h and 2 days, or even longer, depending on the application. A real time monitoring may be implemented by sufficiently small time intervals, e.g. time intervals smaller than 1s, 500 ms, or 200 ms.

According to an embodiment, the estimated power loss may be compared to a power loss model.

According to an embodiment, the power loss model may comprise a power loss function that describes a power loss of the wind park in dependence on the electrical power output of the wind park. As a result, the power loss of the wind park may be modeled for different power outputs corresponding to different operation conditions.

The power loss function may comprise a polynomial function. This may allow modelling of the power loss of the wind park in a simple but flexible way by using a number of variables that need to be determined. Preferably, at least 3 determinable variables may be used for the polynomial function to emulate the power loss of the wind park.

The method may further comprise the collection of calibration data by repeatedly estimating the power loss under predefined operating conditions of the wind park. The power loss model may then be calibrated using the collected calibration data. The predefined operating conditions may comprise predetermined normal operating conditions of the wind park. The calibration data may further comprise data collected for different wind park electrical output powers. Thus, the power loss model calibrated by the calibration data may emulate the power loss of the wind park under normal operating conditions over a range of electrical power outputs.

The calibration the power loss model may further comprise the determination of parameters of the power loss function by fitting the power loss function to the collected calibration data. This way, a model for the power loss at normal operation conditions may be created. By using also using calibration data obtained at different wind park electric output powers, the calibration data may be modelled over a wider range of output powers and operation conditions. By this the power loss model may be able to simulate the wind park for normal operation conditions and various operation scenarios.

According to an embodiment, the estimated power loss may be compared to the power loss model. The comparison between the estimated power loss and the power loss model may comprise determining a difference between the power loss derived from the power loss model and the estimated power loss of the wind park. Furthermore, the comparison may be performed for the same output power values of the wind park. Thus, an accurate comparison of the estimated power loss and the power loss model may be achieved. In particular, the difference may be estimated between the power loss function and the estimated power loss of the wind park. This may allow the determination of the difference of the estimated power loss to the calculated power loss under normal operation conditions over a range of different output powers. Such comparison, and in particular the forming of a respective difference, allows a fast detection if the actual power loss deviates from the power loss expected during normal operation. Misconfigurations and other problems in the wind park may thus be identified in a fast and efficient manner.

According to a further embodiment, the power loss model may comprise a statistical model modelling a statistical spread of the difference between the power loss derived by the power loss model and the estimated power loss of the wind park. Such statistical model may allow an estimation of a significance of a deviation when the monitored power loss deviates from the power loss expected from the model.

The comparison of the estimated power loss to the power loss model may comprise the determination of a deviation of the estimated power loss from the power loss model. The method may further comprise generating a notification signal if the deviation exceeds a threshold value, wherein the notification signal may comprise an alarm. The notification signal has the advantage of easy notification of a deviation from the predetermined normal operation conditions. Thus, countermeasures to mitigate the problems responsible for the deviation may be undertaken shortly after receiving the notification signal, either automatically or by an operator.

The threshold value of the deviation may for example be determined by the statistical model. By setting the threshold value based on the statistical model, a false alarm may be avoided, e.g., if a higher deviation is expected from the model. This may allow triggering of the notification signal when the threshold is exceeded to be configured according to the conditions at the specific wind farm, e.g., due to environmental, or operational conditions.

The statistical model may be described by a standard deviation of the power loss, a FWHM (full width half maximum) of the power loss, or any other statistical spread model of the power loss of the wind park at different output powers of the wind park. The threshold for an output power of the wind park may be determined by the standard deviation or the FWHM of the statistical model for the respective output power of the wind park. The threshold may, e.g., be determined by applying a factor to the standard deviation or the FWHM. The factor may be between 1-5, or between 2-4. Preferably, the factor may be 3, so that the threshold is 3 times the standard deviation or the FWHM. By employing a statistical model describing the standard deviation or the FWHM and using it to set a threshold value for the deviation of the estimated power loss from the power loss model, the deviations expected during normal operation at the particular site can be considered, which may result in fewer false alarms while still providing the required sensitivity to detect problems in the site configuration of the wind park.

As an example, calibration data may be collected by repeatedly estimating the power loss under predefined operating conditions of the wind park and the statistical model may be calibrated using the collected calibration data. The calibration data may be collected during an initial calibration period, and/or may be collected at different points in time during operation of the wind park. Respective calibration data may reflect the actual operating conditions at the site. As more calibration data may be collected, the determining of parameters of the power loss model may be performed more accurately due to more obtained data points and thus a higher data pool. This may also make it possible to more accurately simulate the individual conditions that exist for different wind farms that are installed in different environments. If calibration data is collected during at different times during operation, different trends present at different times of the working cycle may be implemented in the power loss model.

The statistical model may comprise a power loss statistical spread function, e.g., a power loss standard deviation function or a power loss FWHM function, that describes a statistical spread, e.g., the standard deviation or the FHWM, of the power loss of the wind park in dependence on different output powers of the wind park. The power loss statistical spread function may be implemented by a higher order polynomial function, e.g. 3-10th order, e.g. a 4th order polynomial. Furthermore, the calibration may comprise determining parameters of the power loss statistical spread function, e.g., of the standard deviation function. Thus, the deviation of the estimated power loss from the power loss model may be further quantified by using the statistical spread model.

The calibration of the statistical model may comprise fitting the power loss statistical spread function, e.g., the power loss standard deviation or power loss FWHM, to statistical spread data determined from the collected calibration data for different output powers of the wind park, e.g., from the standard deviation or the FWHM. By such fitting, the statistical model may describe rather precisely the expected spread in the power loss data of the particular wind park. The statistical spread function may thus provide an accurate means for deriving a notification threshold for the deviation of the estimated power loss from the power loss model, which is valid for different working conditions of the wind park.

According to an embodiment of the invention, a system for monitoring the operation of a respective wind park is provided. The system comprises a processing unit and a memory, wherein the memory comprises control instructions which when executed by the processing unit cause the processing unit to perform any of the methods described herein. The system may be a monitoring system; it may for example be implemented in a wind park controller. The system may be configured to perform any of the methods disclosed herein. The system may further comprise an interface for obtaining parameters of a power loss model and/or may store a power loss model in the memory. The power loss model may have any of the described configurations. By such system, advantages similar to the ones outlined further above may be achieved.

According to an embodiment of the invention, a computer program for monitoring the operation of a wind park is provided. The computer program comprises control instructions which, when executed by a processing unit of a monitoring system that monitors the operation of the wind park, in particular the above-mentioned monitoring system, cause the processing unit to perform any of the methods described herein. The computer program may be provided on a volatile or non-volatile storage medium or data carrier.

It is to be understood that the features mentioned above and those yet to be explained below can be used not only in the respective combinations indicated, but also in other combinations or in isolation, without leaving the scope of the present invention. In particular, the features of the different aspects and examples of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a wind park including a control system according to an embodiment of the invention.
Fig. 2 is a flow drawing illustrating a method of calibrating a power loss model of a wind park according to an embodiment.
Fig. 3 is a diagram illustrating the fitting of a power loss function to estimated power loss data according to an embodiment.
Fig. 4 is a diagram illustrating the comparison of the power loss function to the estimated power loss data of figure 3.
Fig. 5 is a graph illustrating the fitting of a power loss standard deviation function to standard deviation data obtained based on the deviation shown in figure 4.
Fig. 6 is a flow drawing illustrating a method of monitoring power loss of a wind park according to an embodiment.
Fig. 7 is a diagram illustrating the power loss of a wind park estimated with a method according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

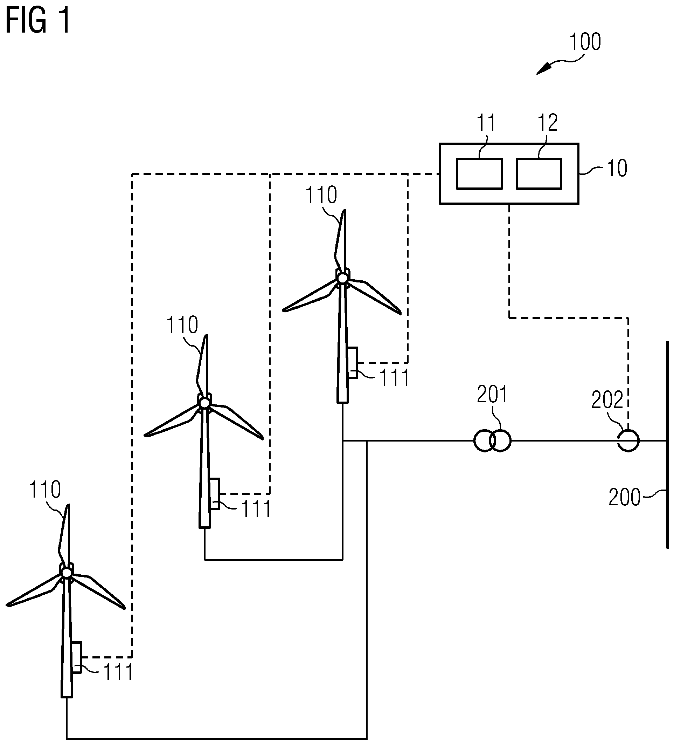

Fig. 1 schematically shows a wind park 100 including a monitoring system 10 according to an embodiment. Wind park 100 includes several wind turbines 110 which convert wind energy into electrical energy that is fed into a power grid 200. The wind turbines 110 may have any known configuration and may in particular include a power meter 111, which may be a dedicated power meter or which may be implemented in, e.g., a wind turbine controller. The individual power output of the plural wind turbines 110 of the wind park 100 may be collected and may be provided to the power grid 200 at a point of common coupling (PCC). Prior to providing the electrical power to the grid, it may optionally be transformed by means of a substation transformer 201.

In the present example, the monitoring system 10 receives data on the power output produced by the plural individual wind turbines from the power meters 111. By using the power meters 111 of individual turbines 110, localized problems may be identified. Monitoring system 10 may further receive data on the wind park electrical power output, which may be the power output that the wind park feeds to the power grid 200. The wind park electrical power output may be monitored at a power grid coupling point 202, e.g. the PCC. Respective data may be available to a wind park controller, thus allowing easy implementation into the already existing setup of the wind park 100.

Monitoring system 10 may comprise a processing unit 11 (e.g., a microprocessor, DSP, application-specific integrated circuit, or the like) and a memory 12, such as RAM, ROM, Flash Memory, or the like. Memory 12 may store control instructions, which, when executed by processing unit 11, may cause the monitoring system 10 to perform any of the methods disclosed herein.

Based on measurements of the power meters 111 installed on the plural wind turbines 110 of the wind park 110 and the wind park power output that is fed to the power grid 200 and measured at the grid coupling point 202, the monitoring system 10 may estimate a power loss of the wind park 100. The monitoring system may determine a summed individual power output of the plural wind turbines 110 by summing up the individual power outputs measured individually at the wind turbines by power meters 111. The power loss may be estimated by monitoring system 10 by forming a difference between the summed individual power output and the wind park power output monitored at grid coupling point 202. Monitoring system 10 may further be configured to use the estimated power loss data to compare it to a power loss model that is based on calibration data from operation at predefined operating conditions, as described in more detail herein below.

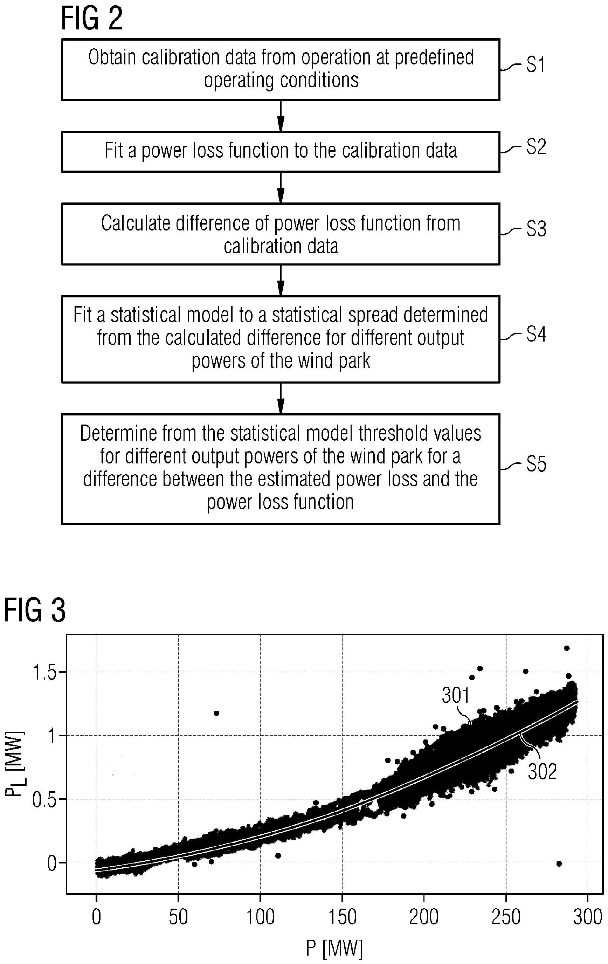

Fig. 2 schematically shows the process of calibrating the power loss model. In a first step S1, calibration data 301 from operation at predefined operating conditions is obtained. Preferably, this data is obtained from normal operation conditions. The calibration data may preferably include data over a wide range of output powers of the wind park, so that the behaviour of the power loss of the wind park for different output powers may be mapped. This calibration data may then be used to determine the fitting parameters of a power loss function in a further step S2. The power loss function may comprise a polynomial, preferably of second-order.

The fitting procedure is shown in Fig. 3. The x-axis represents different output powers P of the wind park 100. The y-axis represents the estimated power loss P_{L} of the wind park 100. The measured calibration data points 301 shown in the graph are data points obtained during normal operation conditions. The parameters of a power loss function may be determined by using the measurement calibration data points 301. In the present example, a second-order polynomial is used and thus 3 fitting parameters need to be determined. The parameters may be obtained by fitting the power loss model curve 302 to the measurement points 301, using, e.g., a least squares method.

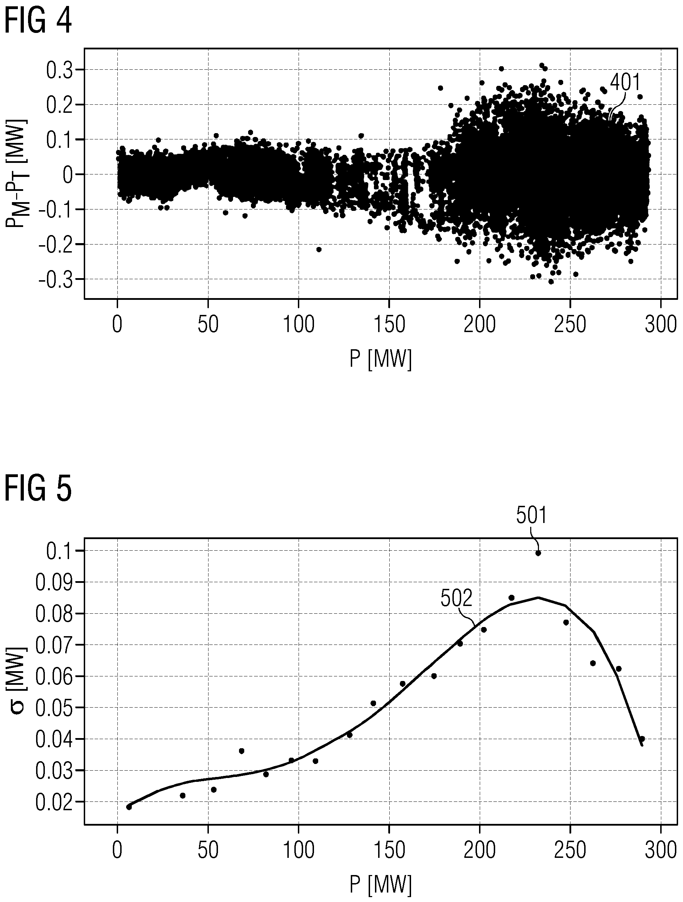

Returning to Fig. 2, the next step S3 in the calibration of the power loss data comprises the calculation of the difference of the power loss data and the power loss function using the calibration data, so that a quantification of the deviation of the power loss model from the calibration data points may be obtained. This calculation is shown in Fig. 4. Here, the calculated difference between the calibration data P_{M} and the power loss model P_{T}, P_{M}-P_{T} is plotted over the various output powers P. This results in a spread of power loss difference values 401 of the power loss difference for various power outputs.

Coming back to Fig. 2, in a further calibration step S4, the spread of the power loss difference may be modelled by using a power loss statistical spread function, e.g., a polynomial function that models a standard deviation or a FWHM of the power loss observed at a particular wind park power output. For a certain range of wind park output power (e.g. 230 MW to 240 MW in the present example, the deviation in power loss can be binned, and the statistical spread, e.g. the standard deviation or FWHM, can be determined from the resulting curve. Respective ways of determining a standard deviation or other measured of statistical spread for the comparison of measured data values with a model are known in the art and will not be explained in greater detail here.

The statistical spread data points may then be used to determine the fitting parameters of the power loss statistical spread function. This is shown in detail in Fig. 5. The graph shows the standard deviation σ determined from the spread of data of figure 4 plotted over the various output powers P of the wind park. The plotted standard deviation data points 501 in the graph represent points that are determined by using the standard deviation. Subsequently, the power loss spread function fitting parameters may be obtained. In the present example, a fourth-order polynomial is used and correspondingly 5 variables are determined by fitting the power loss statistical spread function 502 to the data points 501.

The power loss model may thus describe the power loss depending on the output power of the wind park 100 during normal operation. Furthermore, the power loss model may include a statistical model that models the deviation of the calibration values from the power loss model by a power loss spread function for a range of different output powers.

Taking a step back to Fig. 2, the power loss spread function may be used to set a threshold value by which the estimated power loss monitored during operation may differ from the power loss model, in particular from the determined power loss function (step S5). For example, the threshold may correspond to the statistical spread, e.g. the standard deviation, multiplied by a factor between 1 and 5, for example by a factor of 3.

It is to be understood that the above steps for the calibration of the power loss model may be carried out individually, in combination, or in any order.

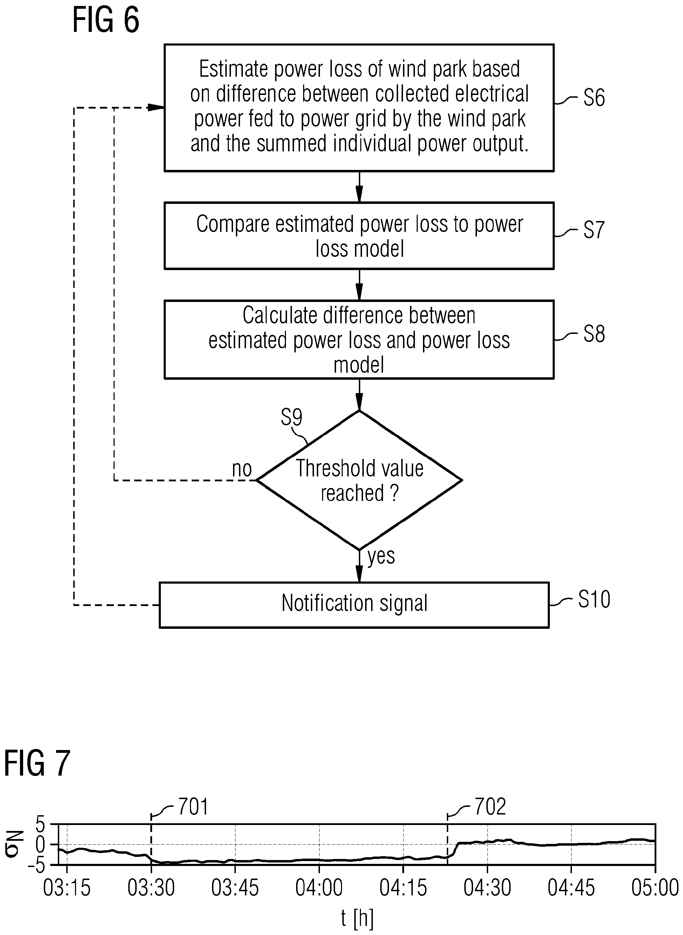

An exemplary implementation of the monitoring method is shown in Fig. 6. In a first step S6, the power loss of wind park 100 may be estimated based on the difference between collected electrical power fed to power grid 200 by the wind park 100 and the summed individual power output of the plural individual wind turbines 110 measured by power meters 111. In a further step S7, the estimated power loss may then be used for comparison to the power loss model calibrated by the steps S1-S5 mentioned before. Thus, this step allows comparison of the estimated power loss and the power loss derived from the power loss model for the particular wind park power output. Thereby, deviation of the power loss from normal operation may be detected.

In particular, this comparison may comprise calculating a difference between the estimated power loss and the power loss model in step S8. Furthermore, the power loss spread function obtained during the calibration may be used to assess the significance of the deviation of the estimated power loss from the power loss model. In step S9, the threshold value estimated from the power loss spread function may be used to determine if a severe event is present. In case of a severe event, i.e. the obtained difference exceeding the threshold, a notification signal is raised in a next step S10. The notification signal may thus indicate if the site is misconfigured and countermeasures may be taken quickly to ensure normal operation.

However, if the deviation of the estimated power loss from the power loss model of the wind park is not reaching the threshold value, the method starts again by estimating a new value for the power loss at step S6.

Fig. 7 shows actual power loss data for illustrating an exemplary application of the method. Here, the difference between the estimated power loss and the power loss model is shown in numbers of the standard deviation σ_{N} and is plotted over a time period t given in hours h. In the present example, the threshold value for the deviation of the estimated power loss from the power loss model is set to be three times the standard deviation. After a certain time a misconfiguration event 701 occurs (such as a change in the collector grid configuration) and the difference exceeds the threshold value causing the monitoring system 10 to raise a notification signal. By receiving this notification signal, countermeasures to avoid abnormal operation may be taken and normal operation may be restored after a short time. In the present example, a correction event 702 occurs after which the difference drops again below the threshold of three standard deviations. As can be seen from the diagram, the monitored power loss values differ during most times from the model, however only to a degree judged as insignificant by the threshold set on the basis of the standard deviation. This method also considers that for different power output of the wind park, the standard deviation can differ significantly (as shown by the different spreads seen in Fig. 4). False alarms can thus be prevented effectively while maintaining the sensitivity for actual power loss events.

The methods and systems disclosed herein may thus allow monitoring of the power loss of a wind park. In particular, they may allow notification of abnormal operation conditions by using a power loss model calibrated by using calibration data obtained during normal operation and thus may avoid a misconfiguration of the wind turbines or the wind park.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A method of monitoring the operation of a wind park (100) comprising plural wind turbines (110), wherein the wind turbines (110) generate electrical power, and wherein the wind park (100) is configured to collect the generated electrical power and to feed the collected electrical power to a power grid (200), wherein the method comprises:
- monitoring an individual electrical power output of plural individual wind turbines (110) of the wind park (100) and determining a summed individual power output by summing the monitored individual electrical power output of the wind turbines (110);
- monitoring a wind park (100) electrical power output fed by the wind park (100) to the power grid (200); and
- estimating a power loss of the wind park (100) based on a difference between the wind park (100) electrical power output fed by the wind park (100) to the power grid (200) and the summed individual power output.

2. The method according to claim 1, wherein the wind park (100) electrical power output is monitored at a is monitored at a grid coupling point (202) of the plural wind turbines (110) of the wind park (100) to the power grid.

3. The method according to any of the preceding claims, wherein the summed individual power output provided by the wind turbines (110) and the wind park (100) electrical power output fed by the wind park (100) to the power grid (200) are monitored repeatedly at predetermined time intervals or are monitored in real time.

4. The method according to any of the preceding claims, further comprising comparing the estimated power loss to a power loss model.

5. The method according to any of the preceding claims, wherein the power loss model comprises a power loss function that describes a power loss of the wind park (100) in dependence on the wind park (100) electrical power output of the wind park (100).

6. The method according to claim 5, wherein the power loss function is a polynomial function.

7. The method according to any of claims 4-6, wherein the method further comprises collecting calibration data by repeatedly estimating the power loss under predefined operating conditions of the wind park (100) and calibrating the power loss model using the collected calibration data.

8. The method according to claim 7 when dependent on claim 5 or 6, wherein calibrating the power loss model comprises determining parameters of the power loss function by fitting the power loss function to the collected calibration data.

9. The method according to any of claims 4-8, wherein comparing the estimated power loss to the power loss model comprises determining a difference between a power loss derived from the power loss model and the estimated power loss of the wind park (100).

10. The method according to claim 9, wherein the power loss model comprises a statistical model modelling a statistical spread of the difference between the power loss derived by the power loss model and the estimated power loss of the wind park (100).

11. The method according to any of claims 4-10, wherein the comparing of the estimated power loss to the power loss model comprises determining a deviation of the estimated power loss from the power loss model, wherein the method further comprises generating a notification signal if the deviation exceeds a threshold value.

12. The method according to claim 10 and 11, wherein the threshold is determined by the statistical model.

13. The method according to claim 12, wherein the statistical model describes a standard deviation or a FWHM of the power loss of the wind park (100) at different output powers of the wind park (100), wherein the threshold for an output power of the wind park (100) is determined based on the standard deviation or the FWHM of the statistical model for the respective output power of the wind park (100).

14. A system (10) for monitoring the operation of a wind park (100) comprising plural wind turbines (110), wherein the wind turbines (110) generate electrical power, and wherein the wind park (100) is configured to collect the generated electrical power and to feed the collected electrical power to a power grid (200), wherein the system comprises a processing unit and a memory, wherein the memory comprises control instructions which when executed by the processing unit cause the processing unit to perform any of the methods of claims 1-13.

15. A computer program for monitoring the operation of a wind park (100), wherein the computer program comprises control instructions which, when executed by a processing unit of a system that monitors the operation of the wind park (100), cause the processing unit to perform the method of any of claims 1-13.
